(19) Europäisches Patentamt / European Patent Office / Office européen des brevets

(11) **EP 4 112 576 B1**

(12) **EUROPEAN PATENT SPECIFICATION**

(45) Date of publication and mention
of the grant of the patent:
**07.08.2024 Bulletin 2024/32**

(21) Application number: **21761929.5**

(22) Date of filing: **17.02.2021**

(51) International Patent Classification (IPC):
*C03C 8/16* (2006.01)       *C03C 8/14* (2006.01)
*H05B 6/12* (2006.01)       *F24C 15/10* (2006.01)

(52) Cooperative Patent Classification (CPC):
**C03C 17/3411; C03C 8/14; C03C 8/16;
F24C 15/10;** C03C 2217/452; C03C 2217/485

(86) International application number:
**PCT/JP2021/005920**

(87) International publication number:
**WO 2021/172129 (02.09.2021 Gazette 2021/35)**

(54) **COOKING DEVICE TOP PLATE**

DECKPLATTE EINER KOCHVORRICHTUNG

PLAQUE SUPÉRIEURE DE DISPOSITIF DE CUISSON

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.02.2020 JP 2020033278
25.12.2020 JP 2020217694**

(43) Date of publication of application:
**04.01.2023 Bulletin 2023/01**

(73) Proprietor: **Panasonic Intellectual Property
Management Co., Ltd.
Osaka-shi, Osaka 540-6207 (JP)**

(72) Inventors:
• **ZUKAWA, Takehiro**
**Osaka 540-6207 (JP)**
• **KANAZAWA, Narutoshi**
**Osaka 540-6207 (JP)**

(74) Representative: **SSM Sandmair
Patentanwälte Rechtsanwalt
Partnerschaft mbB
Joseph-Wild-Straße 20
81829 München (DE)**

(56) References cited:
WO-A2-03/084891       JP-A- 2008 215 651
JP-A- 2008 541 392       JP-A- 2009 018 986
JP-A- 2011 208 820       JP-A- 2013 043 827

**Description**

Technical Field

The present disclosure relates to a cooking device top plate.

Background Art

Transparent heat-resistant glass is used as a base for a cooking device top plate such as an electromagnetic induction cooking device or a thermoelectric cooking device that heats with infrared rays emitted from a heating element. By providing a light shielding colored layer on the lower surface of the heat-resistant glass substrate, that is, on a surface opposite to the cooking surface of the heat-resistant glass substrate, a cooking device having a color tone that meets the needs of customers is achieved.

Conventionally, as the heat-resistant glass substrate, a quartz glass substrate, a borosilicate glass substrate, or a crystallized glass substrate or the like is used. In recent years, a crystallized glass substrate having high strength and a suppressed thermal expansion coefficient is often used.

As a top plate including the crystallized glass substrate, for example, an electromagnetic cooking device glass top plate having enhanced designability without losing the original strength of substrate glass has been proposed. For example, Patent Literature 1 discloses an electromagnetic cooking device glass top plate. In the electromagnetic cooking device glass top plate, one or a plurality of layers of matte decorative glass made of a glass composition are laminated on the back surface of substrate glass made of transparent low-expansion glass. Furthermore, one or a plurality of layers of a glossy layer or a light shielding layer are laminated on the laminated product. The linear thermal expansion coefficient of the substrate glass and the linear thermal expansion coefficient of the matte decorative glass are specified. Patent Literature 2 discloses a cooking device glass top plate. In the cooking device glass top plate, a highly reflective film containing one or more of $TiO_2$, $CeO_2$, and $ZrO_2$ as a main component and having a thickness of 20 to 300 nm is laminated on a back surface that is a surface opposite to the cooking surface of substrate glass made of transparent low-expansion glass. A pearl-like layer containing a pearl-like material is laminated on the highly reflective film. Furthermore, a light shielding layer is laminated on the pearl-like layer.

Furthermore, Patent Literature 3 discloses a cooking device glass top plate that achieves both texture and visibility of display. In the cooking device glass top plate, a light shielding portion and a translucent display portion are provided on substrate glass. A display is disposed below the display portion. The substrate glass has a cooking surface formed of a smooth surface and a back surface formed of a roughened surface. The light shielding portion is provided by laminating a light shielding layer on the back surface of the substrate glass. The display portion is provided by bonding a translucent plate to the back surface of the substrate glass with a transparent intermediate layer interposed therebetween. Furthermore, the translucent plate has a smooth exposed surface at least not facing the transparent intermediate layer.

Patent Literature 4 discloses a cooking device top plate having excellent aesthetic appearance. The cooking device top plate includes a transparent crystallized glass substrate containing titanium oxide, a reflective film formed on the back surface of the transparent crystallized glass substrate and reflecting light in at least a part of a visible wavelength range, and a color tone correction film disposed between the transparent crystallized glass substrate and the reflective film and having a light transmittance gradually decreasing as a wavelength increases in the visible wavelength range. The reflective film and the color tone correction film are configured such that an average light reflectance at an interface between the color tone correction film and the transparent crystallized glass substrate is lower than an average light reflectance at an interface between the color tone correction film and the reflective film in the visible wavelength range.

Patent Literature 5 discloses a cooking device top plate that is used as a top plate of a cooking device provided with an electromagnetic induction heating device and includes a low-expansion transparent crystallized glass plate. In the cooking device top plate, a decorative layer including a dense inorganic pigment layer is formed on a part or the whole of the cooking surface side of the low-expansion transparent crystallized glass plate, and a light shielding layer including a porous inorganic pigment layer is formed on a part or the whole of a heating device side. Patent Literature 6 discloses a light shielding glass plate. In the light shielding glass plate, a porous light shielding layer containing 40 to 90% by weight of an inorganic pigment powder and 10 to 60% by weight of a glass flux is provided on the surface of a glass plate made of transparent low-expansion crystallized glass. The adjacent inorganic pigment powders, or the inorganic pigment powder and the glass plate are bonded to each other by glass formed by melting and solidifying the glass flux.

Patent Literature 7 discloses a method for producing a glass or glass-ceramic product including a decorative layer. The method includes: mixing at least one decorative pigment with a sol-gel binder, and curing the pigment mixed with the sol-gel binder on the glass or glass-ceramic substrate of the product by annealing to form a decorative layer having a porous ceramic-like structure.

Patent Literature 8 proposes, as a glass-ceramic plate or a glass plate with reinforced mechanical strength. The glass-ceramic plate or the glass plate includes a glass-ceramic or glass substrate in the form of a plate having two substantially parallel main surfaces, and at least one layer containing at least one high-temperature resistance (co)polymer, or a porous silica-based inorganic matrix, which is fixed to at least one of the two main surfaces. The glass-ceramic or glass substrate has a thickness of less than 4 mm.

Citation List

Patent Literature

Patent Literature 1: JP 2008-16318 A
Patent Literature 2: JP 2008-215651 A
Patent Literature 3: JP 2008-267633 A
Patent Literature 4: JP 2011-208820 A
Patent Literature 5: JP 2003-168548 A
Patent Literature 6: JP-10-273342 A
Patent Literature 7: JP 2008-536791 A
Patent Literature 8: JP 2007-530405 A

Summary of Invention

Technical Problem

The crystallized glass has excellent strength characteristics, but the glass itself exhibits yellowness. This crystallized glass contains $Li_2O$-$Al_2O_3$-$SiO_2$ as a main component, and a transition element such as Ti or Zr added for crystallization. This transition element is said to cause the yellowness. When a colored layer provided on the lower surface of the crystallized glass substrate has a dark color tone, there is almost no problem even if the crystallized glass substrate exhibits yellowness. However, as customer needs, a white cooking device top plate may be required. When conventional borosilicate glass is used for a substrate, a white cooking device top plate can be achieved by providing a white colored layer on the lower surface of the substrate. However, even if a colored layer is white when crystallized glass is used as a substrate, a color tone visually recognized through the crystallized glass substrate exhibits yellowness, which makes it difficult to achieve the white cooking device top plate.

Patent Literatures 1 to 3 and 5 enhance texture such as a matte tone or metallic luster as a design property, and in particular, it is not an object thereof to achieve the white cooking device top plate. Patent Literature 4 discloses the cooking device top plate having excellent aesthetic appearance, but it is not an object thereof to achieve the white cooking device top plate that is particularly difficult. Furthermore, Patent Literatures 6 to 8 particularly enhance the mechanical strength of the cooking device top plate, and in particular, it is not an object thereof to achieve the white cooking device top plate.

The present disclosure has been made to solve the above problems, and an object of the present disclosure is to provide a cooking device top plate that exhibits white and contains crystallized glass exhibiting high strength and low-thermal expansibility as a substrate.

Solution to Problem

According to the invention, there is provided a white cooking device top plate (1, 21, 31, 41, 51, 61, 71, 81) comprising: a crystallized glass substrate (2, 22, 32, 42, 52, 62, 72, 82) containing $Li_2O$-$Al_2O_3$-$SiO_2$ as a main component and a transition element; and a substrate color improving layer provided on a lower surface of the crystallized glass substrate (2, 22, 32, 42, 52, 62, 72, 82), the substrate color improving layer containing a blue pigment and including a brightness enhancing layer (3, 23, 33, 43, 53, 63, 73, 83) having a refractive index smaller than that of the crystallized glass substrate (2, 22, 32, 42, 52, 62, 72, 82) or not less than a refractive index of the crystallized glass substrate (2, 22, 32, 42, 52, 62, 72, 82) + 0.1

Advantageous Effects of Invention

The present invention makes it possible to provide a cooking device top plate that exhibits white and has high durability since the cooking device top plate contains crystallized glass exhibiting high strength and low-thermal expansibility as a substrate.

Brief Description of Drawings

Fig. 1 is a schematic cross-sectional view of a preliminary experiment sample.
Fig. 2 is a schematic cross-sectional view of a cooking device top plate shown as an embodiment of the present invention.
Fig. 3 is a graph showing another preliminary experiment results.
Fig. 4A is a schematic cross-sectional view of another preliminary experiment sample (without an air layer).
Fig. 4B is a schematic cross-sectional view of another preliminary experiment sample (with an air layer).
Fig. 5 is a schematic cross-sectional view of a cooking device top plate shown as another embodiment of the present invention.
Fig. 6 is a schematic cross-sectional view of a cooking device top plate shown as another embodiment of the present invention.
Fig. 7 is a schematic cross-sectional view of a cooking device top plate shown as another embodiment of the present invention.
Fig. 8 is a schematic cross-sectional view of a cooking device top plate shown as another embodiment of the present invention.
Fig. 9 is a schematic cross-sectional view of a cooking device top plate shown as another embodiment of the present invention.
Fig. 10 is a graph showing preliminary experiment results.
Fig. 11 is a schematic cross-sectional view of a cooking device top plate shown as another embodiment of the present invention.
Fig. 12 is a schematic cross-sectional view of a cooking device top plate shown as another embodiment of the present invention.
Fig. 13 is a schematic cross-sectional view of a cooking device top plate shown as another embodiment of the present invention.
Fig. 14 is a schematic cross-sectional view of a cooking device top plate shown as another embodiment of the present invention.
Fig. 15 is a schematic cross-sectional view of a cooking device top plate shown as another embodiment of the present invention.

Description of Embodiments

On the premise that crystallized glass exhibiting high strength and low-thermal expansibility and containing $Li_2O-Al_2O_3-SiO_2$ as a main component and a transition element, is used as a substrate, the present inventors have intensively studied to achieve a white cooking device top plate having a color tone close to that when a white coating material is applied to a conventional borosilicate glass substrate. As a result, the present inventors have found that the white cooking device top plate includes: a crystallized glass substrate containing $Li_2O-Al_2O_3-SiO_2$ as a main component and a transition element; and a substrate color improving layer provided on a lower surface of the crystallized glass substrate, the substrate color improving layer containing a blue pigment and including a brightness enhancing layer having a refractive index smaller than that of the crystallized glass substrate or not less than a refractive index of the crystallized glass substrate + 0.1, and have arrived at the present invention.

Hereinafter, embodiments of the present invention will be described with reference to the drawings, including the circumstances that have arrived at the present invention. The present invention is not limited by the embodiments. Here, the order of description of the embodiments may be different from the order of the invention described above.

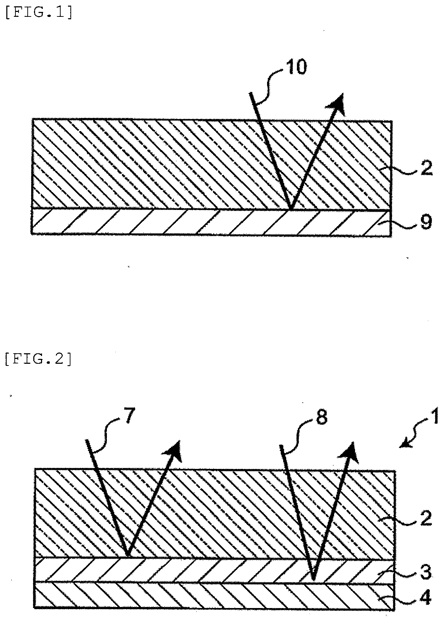

First, in order to study means for correcting a color tone from yellowness to white, as shown in Fig. 1, the present inventors have prepared a preliminary experiment sample, and have confirmed the color tone of the preliminary experiment sample. In the preliminary experiment sample, a colored layer 9 in which a blue pigment as a complementary color of the yellowness is blended in an amount of 10% by volume in the colored layer is provided on the lower surface (back surface) of a crystallized glass substrate 2. In Fig. 1, reflected light 10 indicates light reflected at an interface between the crystallized glass substrate 2 and the colored layer 9. The yellowness was suppressed by the configuration of Fig. 1, but the reflected light 10 was weak, and the brightness of the colored layer decreased, which accordingly exhibited gray.

Although not shown, the present inventors also prepared a preliminary experiment sample in which a bright material such as mica or a reflective material such as glass beads was dispersed in the colored layer for the purpose of improving the brightness of the colored layer. In this preliminary experiment sample, a white pigment and a blue pigment themselves present together with the bright material and the reflective material exhibited a light shielding property, whereby it was separately confirmed that a brightness enhancing effect due to the addition of the bright material and the reflective material was not sufficiently exhibited.

The present inventors have further studied for the purpose of enhancing the brightness while correcting the color tone from the yellowness to the white. As a result, as described above, the present inventors have found that the white cooking device top plate includes:

- a crystallized glass substrate containing $Li_2O\text{-}Al_2O_3\text{-}SiO_2$ as a main component and a transition element; and
- a substrate color improving layer provided on a lower surface of the crystallized glass substrate, the substrate color improving layer containing a blue pigment and including a brightness enhancing layer having a refractive index smaller than that of the crystallized glass substrate or not less than a refractive index of the crystallized glass substrate +0.1, whereby the brightness of the cooking device top plate is enhanced as compared with the configuration of Fig. 1 including the crystallized glass substrate and the colored layer. In the present embodiment, in particular, by providing the substrate color improving layer, the yellowness of the crystallized glass substrate can be improved to a color tone having high whiteness.

The substrate color improving layer includes the brightness enhancing layer. As described above, the refractive index of the brightness enhancing layer is smaller than that of the crystallized glass substrate or not less than the refractive index of the crystallized glass substrate +0.1. The brightness enhancing layer preferably has a refractive index smaller than that of the crystallized glass substrate. It is considered that, as the refractive index of the brightness enhancing layer is smaller than that of the crystallized glass substrate and preferably closer to the refractive index of 1.0 of an air layer, blue light that enters the crystallized glass substrate, and is totally reflected in the crystallized glass substrate to be less likely to be extracted is likely to be extracted to the outside of the crystallized glass substrate, whereby the blue light totally reflected in the crystallized glass substrate can be reduced. As a result, it is considered that the brightness of the cooking device top plate can be further enhanced, and the yellowness can be suppressed to increase the whiteness. Even in any of first to third embodiments to be described later, the same mechanism is considered to be obtained.

The substrate color improving layer contains the blue pigment. The cooking device top plate of the present embodiment may include the substrate color improving layer including the brightness enhancing layer having a controlled refractive index as described above and containing the blue pigment, and a specific aspect thereof is not limited. Therefore, the blue pigment may be contained in the brightness enhancing layer constituting the substrate color improving layer, or may be contained in a layer other than the brightness enhancing layer constituting the substrate color improving layer. When the blue pigment is contained in the brightness enhancing layer, the substrate color improving layer may be formed only of the brightness enhancing layer.

The substrate color improving layer may include a color tone adjusting layer as a layer other than the brightness enhancing layer. When the brightness enhancing layer does not contain the blue pigment, the color tone adjusting layer can contain the blue pigment. When the brightness enhancing layer contains the blue pigment, the color tone adjusting layer may or may not contain the blue pigment regardless of the presence or absence of the blue pigment contained in the color tone adjusting layer.

According to the form of the substrate color improving layer, examples of the form of the cooking device top plate according to the present embodiment include the following first to third embodiments. Hereinafter, each of the embodiments will be described in order.

(First Embodiment)

In the first embodiment, the substrate color improving layer includes the brightness enhancing layer, and a color tone adjusting layer provided on the lower surface of the brightness enhancing layer, the color tone adjusting layer containing a white pigment and a blue pigment. In detail, a cooking device top plate of the first embodiment includes the following (i) crystallized glass substrate and (ii) substrate color improving layer:

(i) the crystallized glass substrate containing $Li_2O\text{-}Al_2O_3\text{-}SiO_2$ as a main component and a transition element; and
(ii) the substrate color improving layer including
(ii-1) a brightness enhancing layer provided on a lower surface of the crystallized glass substrate, the brightness enhancing layer having a refractive index smaller than that of the crystallized glass substrate or not less than a refractive index of the crystallized glass substrate + 0.1, and
(ii-2) a color tone adjusting layer provided on a lower surface of the brightness enhancing layer, the color tone adjusting layer containing a blue pigment and a white pigment.

The brightness enhancing layer may be a brightness enhancing layer having a difference in refractive index from the crystallized glass substrate of 0.1 or more. As described above, the brightness of the first embodiment is enhanced as compared with the configuration of Fig. 1 including the crystallized glass substrate and the colored layer.

As an embodiment of the first embodiment, Fig. 2 schematically shows a cooking device top plate 1 having a configuration in which a crystallized glass substrate 2, a brightness enhancing layer 3, and a color tone adjusting layer 4 are laminated. In Fig. 2, reflected light 7 is light reflected at the interface between the crystallized glass substrate 2 and the brightness enhancing layer 3, and reflected light 8 is light reflected at the interface between the brightness enhancing layer 3 and the color tone adjusting layer 4. Hereinafter, the brightness enhancing layer and the color tone adjusting layer constituting the substrate color improving layer of the first embodiment, and the crystallized glass substrate will be described in order.

[Substrate Color Improving Layer of First Embodiment]

(Brightness Enhancing Layer of First Embodiment)

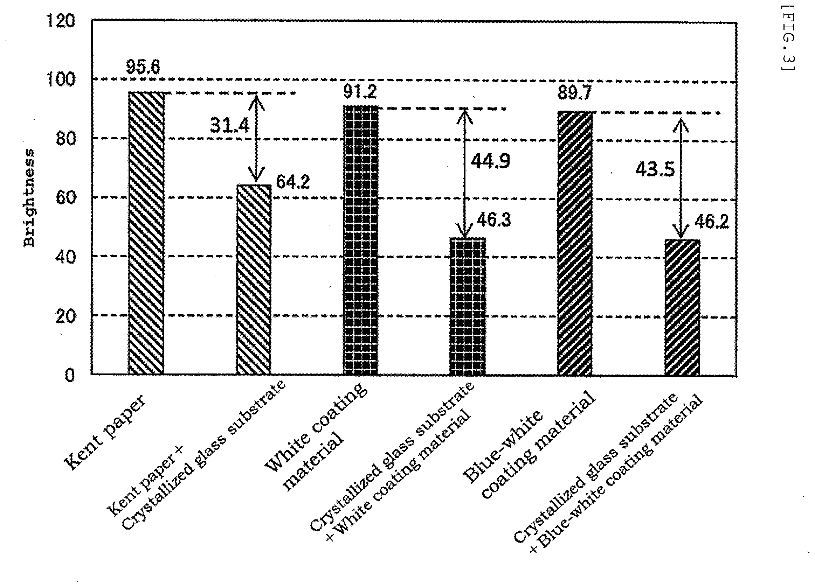

In studying the configuration of the brightness enhancing layer, first, the following experiment was performed as a preliminary experiment. The brightness of Kent paper and the brightness when a crystallized glass substrate (Neoceram N-0) was placed on the Kent paper were measured, and a difference between the brightnesses was determined. A sample in which a white layer was formed by printing a white coating material (Jujo Chemical Co., Ltd. (white)) on the lower surface (back surface) of a crystallized glass substrate (Neoceram N-0), and a sample in which a blue-white layer was formed by printing a coating material containing a blue pigment (Jujo Chemical Co., Ltd. (white 100: blue 2)) on the lower surface of a crystallized glass substrate (Neoceram N-0) were prepared. The brightnesses of the lower surface (back surface) and the front surface of each of the samples were measured. The results are shown in Fig. 3.

The following was found from Fig. 3. That is, the brightness when the crystallized glass substrate (Neoceram N-0) was placed on the white paper (Kent paper) decreased by 31.4 from the brightness of only the Kent paper. In contrast, the brightness when the white coating material was directly printed on the lower surface of the crystallized glass substrate decreased by 44.9 from the brightness of only the white coating material. The brightness when the blue-white coating material was directly printed on the lower surface of the crystallized glass substrate also decreased by 43.5 from the brightness of only the blue-white coating material. From these experiment results, it is considered that when the crystallized glass substrate (Neoseram N-0) is placed on the Kent paper, an air layer is present between the Kent paper and the crystallized glass substrate (Neoseram N-0), whereby the air layer provides higher brightness than that when the coating material is directly printed on the crystallized glass substrate. From this result, the present inventors have found that it is effective to provide the air layer or a layer capable of improving brightness as with the air layer between the crystallized glass substrate and the color tone adjusting layer.

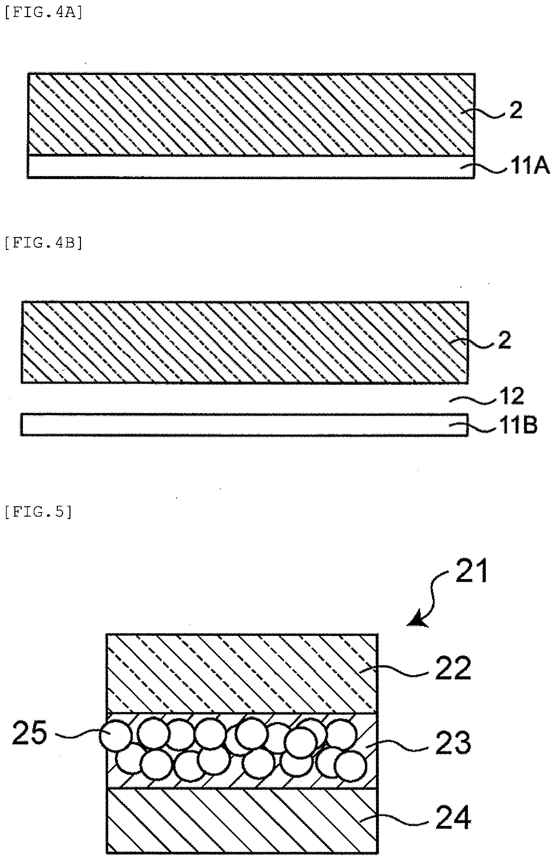

Furthermore, as a result of studying the difference in brightness due to the difference in the presence or absence of the air layer, as shown in Fig. 4A, when a white colored layer 11A was formed by directly printing a coating material on a crystallized glass substrate (Neoseram N-0) 2, the refractive indexes of the crystallized glass substrate 2 and the white colored layer 11A were almost the same or close to each other: the refractive index of the crystallized glass substrate 2 was 1.54, and the refractive index of the white colored layer 11A was about 1.5 to 1.6. Meanwhile, as shown in Fig. 4B, when the crystallized glass substrate (Neoseram N-0) 2 was placed on white paper (Kent paper) 11B, a thin air layer 12 was present between the white paper (Kent paper) 11B and the crystallized glass substrate 2, and the refractive index of the air layer 12 was 1.0. The difference from the refractive index of the crystallized glass substrate 2 was larger than that in the case of Fig. 4A. The present inventors have found that the provision of the difference in refractive index from the crystallized glass substrate 2 so as to approach the refractive index of the air layer 12, and a large difference in refractive index from the crystallized glass substrate 2 contribute to improvement in brightness, and has found that a brightness enhancing layer having a controlled refractive index is provided between the crystallized glass substrate and the color tone adjusting layer.

In the present embodiment, the refractive index of the brightness enhancing layer is smaller than that of the crystallized glass substrate or not less than (the refractive index of the crystallized glass substrate + 0.1). In the present embodiment, the difference in refractive index between the brightness enhancing layer and the crystallized glass substrate may be 0.1 or more. As a result, the reflectance at the interface between the crystallized glass substrate 2 and the brightness enhancing layer 3 can be enhanced as compared with reflected light in the configuration of Fig. 1, whereby the brightness can be enhanced. As a result, the color tone can be brought close to white, that is, a color tone when a white coating material is applied to borosilicate glass. The difference between the refractive index of the brightness enhancing layer and the refractive index of the crystallized glass substrate is preferably 0.3 or more, more preferably 0.4 or more, and still more preferably 0.5 or more. The difference between the refractive index of the brightness enhancing layer and the refractive index of the crystallized glass substrate is a value represented by an absolute value, and includes both cases of "refractive index of brightness enhancing layer > refractive index of crystallized glass substrate" and "refractive index of brightness enhancing layer < refractive index of crystallized glass substrate".

When the difference in refractive index between the brightness enhancing layer and the crystallized glass substrate is too large, the amount of light transmitted through the brightness enhancing layer, that is, light reaching the color tone adjusting layer decreases, whereby a color correction effect provided by the color tone adjusting layer decreases. When the color of the color tone adjusting layer is darkened to enhance the color correction effect provided by the color tone adjusting layer, the brightness may be rather lowered. From these viewpoints, in order to suppress the light reflectance at the interface between the brightness enhancing layer and the color tone adjusting layer to preferably 20% or less, the difference in refractive index between the brightness enhancing layer and the crystallized glass substrate is preferably 1.0 or less.

In the present embodiment, the refractive index of the brightness enhancing layer is preferably smaller than that of the crystallized glass substrate as described above. When the refractive index of the brightness enhancing layer is smaller than that of the crystallized glass substrate, the refractive index of the brightness enhancing layer is more preferably smaller than that of the crystallized glass substrate by 0.1 or more, and still more preferably smaller than that of the crystallized glass substrate by 0.3 or more. The refractive index of the brightness enhancing layer is most preferably 1.0 which is the same as the refractive index of the air layer.

When the brightness enhancing layer is made of a uniform material, the refractive index of the brightness enhancing layer can be obtained using an Abbe refractometer or a spectroscopic ellipsometer. When the brightness enhancing layer has voids as described later, the refractive index of the brightness enhancing layer can be obtained as follows. That is, a refractive index $n_2$ of the brightness enhancing layer can be obtained from the following equation using a refractive index $n_1$ of a bulk material such as a hollow material for forming voids, obtained by the Abbe refractometer or the spectroscopic ellipsometer and a void ratio $\varphi_1$ obtained by observing the cross section of the brightness enhancing layer containing voids with an electron microscope.

$$n_2 = n_1 \times (1 - \varphi_1)$$

The brightness enhancing layer may satisfy the definition of the refractive index. Examples of the material for forming the brightness enhancing layer include an inorganic coating material containing an inorganic material such as a glass component and a solvent as main components, and an organic coating material containing an organic resin and a solvent as main components. Examples of the organic resin contained in the organic coating material include a silicone resin, a modified silicone resin such as an acrylic-modified silicone resin, and a urethane-based resin, and a silicone resin is preferable from the viewpoint of securing heat resistance. When the brightness enhancing layer contains, for example, a pigment such as a blue pigment as described later, an inorganic pigment such as a blue inorganic pigment may be contained in the inorganic coating material or the organic coating material.

The brightness enhancing layer may be able to visually recognize the color tone adjusting layer. The brightness enhancing layer preferably exhibits low-thermal expansibility as with the crystallized glass substrate in contact with the brightness enhancing layer. From these viewpoints, it is preferable that the brightness enhancing layer is formed of an inorganic coating material containing an inorganic material such as a glass component and a solvent as main components, and contains the glass component as a main component. For example, the brightness enhancing layer preferably has a component composition close to that of the crystallized glass substrate. For example, the brightness enhancing layer contains $Li_2O$-$Al_2O_3$-$SiO_2$ as a main component, and the component composition of the brightness enhancing layer is adjusted in a batch raw material by changing the ratios of $SiO_2$, $Al_2O_3$, $Li_2O$, $TiO_2$, $ZrO_2$, $P_2O_5$, $BaO$, $Na_2O$+$K_2O$, and $As_2O_3$ and the like that may exist in the composition of glass constituting the crystallized glass substrate.

In the present specification, the phrase "containing $Li_2O$-$Al_2O_3$-$SiO_2$ as a main component" means that at least one of the following (a) and (b) is 50% by weight or more.

(a) the ratio of these oxides in the raw material of glass
(b) the ratio of a total oxide amount in the glass obtained by converting Li, Al, and Si in the glass into each single oxide

Means for making the refractive index of the brightness enhancing layer smaller than that of the crystallized glass substrate is not particularly limited. Examples of the means include using a material having a low refractive index as a material constituting the brightness enhancing layer, and using the void-containing layer as the brightness enhancing layer. Preferably, the void-containing layer is used as the brightness enhancing layer. When the volume ratio of the voids is preferably 30% or more in the brightness enhancing layer, the refractive index can be easily achieved. The volume ratio is more preferably 50% or more, and still more preferably more than 60%. Meanwhile, from the viewpoint of securing the strength of the cooking device top plate, the volume ratio can be preferably 90% or less. The volume ratio is more preferably 60% or less from the viewpoint of securing the strength.

The brightness enhancing layer may be a void-containing layer containing one or more of hollow particles and a porous material, or

may be a void-containing layer in which irregularities are formed on the lower surface of the crystallized glass substrate so that voids can be secured. When the substrate color improving layer includes the color tone adjusting layer, the brightness enhancing layer may be a void-containing layer in which a spacer is provided between the crystallized glass substrate and the color tone adjusting layer so that voids can be secured, or a void-containing layer in which irregularities are formed on the upper surface of the color tone adjusting layer so that voids can be secured.

The void-containing layer may contain a large number of hollow particles or particles formed of a porous material (porous particles) as particles having voids. The void-containing particles may be formed by laminating hollow particles such as spherical bodies and cylindrical bodies. The hollow particles may be sealed or unsealed. In the case of the sealing, the pressure in the voids may be atmospheric pressure or close to vacuum. Examples of the hollow particles include hollow ceramics such as hollow glass, glass beads, hollow alumina, and hollow silica, and hollow polymer particles. Examples of the hollow polymer include those formed of, for example, a silicone resin having excellent heat resistance. The hollow particles are preferably transparent, and may be colorless and transparent, or colored and transparent as long as the effects of the present embodiment are not impaired. Examples of the particles having voids include particles having an average particle diameter of, for example, 10 nm to 100 $\mu$m as expressed by a median diameter (d50).

The ratio of the particles having voids in the brightness enhancing layer may satisfy the ratio of the voids in the brightness enhancing layer, and is not particularly limited. The volume ratio of the particles having voids in the brightness enhancing layer can be set to, for example, 10 to 99%.

As the hollow particles, hollow glass is preferable. As the hollow glass, for example, a commercially available product can be used. Examples of the commercially available product include glass bubbles manufactured by 3M Company, hollow glass manufactured by Potters Barotini Co., Ltd., CellSpheres manufactured by Taiheiyo Cement Corporation, and SiliNax (registered trademark) manufactured by Nittetsu Mining Co., Ltd.

Examples of the porous material include porous particles such as porous glass particles and porous ceramic particles. Instead of using the porous particles, a mixed material containing a porosity-forming glass material, a ceramic material, and a polymer material that foams at a high temperature, for example, may be applied onto a crystallized glass substrate, followed by, for example, firing to cause the polymer material to foam, thereby forming porosity.

The porous material is not limited to the material having cavities, and may be, for example, one in which voids are formed by the aggregation of fibers made of glass and ceramic and the like. Examples of the aggregate of the glass fibers include flocculent glass wool.

When the particles such as the hollow particles are used, the void-containing layer (brightness enhancing layer) may contain a powdered glass-containing glass paste or a transparent ink as a binder for adhesion between the particles. The volume ratio of the binder contained in the brightness enhancing layer can be, for example, within a range of 0.1% or more and 90% or less, and within a range of 0.5% or more and 10% or less in the brightness enhancing layer. Examples of the binder include a glass paste manufactured by Nippon Electric Glass Co., Ltd., a glass frit and a glass paste manufactured by AGC Inc., and a heat-resistant clear ink manufactured by Teikoku Printing Inks Mfg. Co., Ltd.

Examples in which the brightness enhancing layer is formed using the hollow particles include a cooking device top plate 21 including a crystallized glass substrate 22, a layer containing hollow glass 25 as a brightness enhancing layer 23, and a light blue glass coating material layer as a color tone adjusting layer 24, as shown in Fig. 5. As the brightness enhancing layer 23, a layer containing one or more of the above-described porous ceramic particles, glass wool, and glass fiber may be formed in place of the hollow glass-containing layer. A layer containing hollow glass, and one or more of porous ceramic particles, glass wool, and glass fiber may be formed. Although not shown in Fig. 5, for example, a light shielding layer or the like may be formed on the lower surface of the color tone adjusting layer 24.

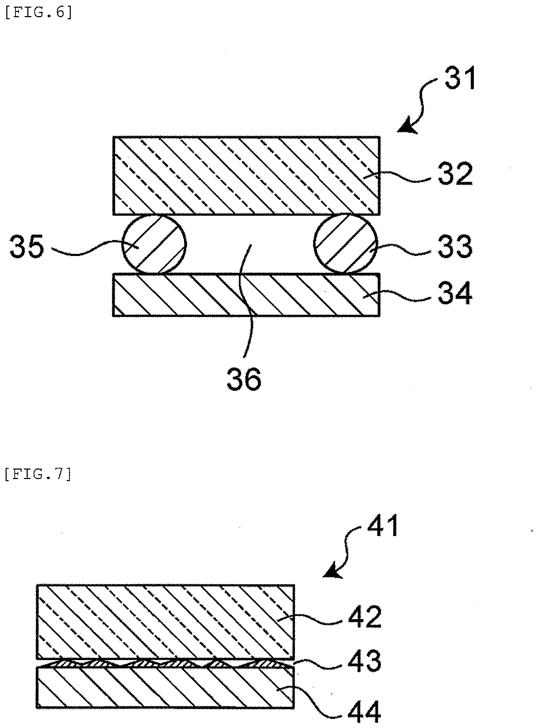

The void-containing layer may be formed by providing a spacer between the crystallized glass substrate and the color tone adjusting layer to form a hollow layer. As shown in Fig. 6, examples thereof include a cooking device top plate 31 including a crystallized glass substrate 32, a light blue glass coating material layer as a color tone adjusting layer 34, and a brightness enhancing layer 33 in which a hollow layer 36 is formed by providing a spacer 35 between the crystallized glass substrate 32 and the color tone adjusting layer 34. The size and disposing of the spacer are not particularly limited as long as the ratio of the voids is satisfied. Examples of the material of the spacer include glass and ceramic. The spacer is preferably transparent. Although not shown in Fig. 6, a second glass substrate or the like to be described later may be formed on the lower surface of the color tone adjusting layer 34 for the purpose of further enhancing the mechanical strength, for example.

The void-containing layer may be an irregularity region provided on the lower surface of the crystallized glass substrate or the upper surface of the color tone adjusting layer. For example, from the viewpoint of enhancing the brightness, it is also considered to provide an embodiment in which the lower surface of the crystallized glass substrate 2 is sufficiently roughened to form an irregularity region as a brightness enhancing layer (void-containing layer), and a color tone adjusting layer is provided on the roughened surface. As shown in Fig. 7, examples thereof include a cooking device top plate 41 including a crystallized glass substrate 42, a light blue glass coating material layer formed as a color tone adjusting layer 44, and a brightness enhancing layer 43 formed by providing irregularities on the upper surface of the color tone adjusting layer 44 between the crystallized glass substrate 42 and the color tone adjusting layer 44. Although not shown in Fig. 7, a second glass substrate or the like to be described later may be formed on the lower surface of the color tone adjusting layer 44 for the purpose of further enhancing the mechanical strength, for example.

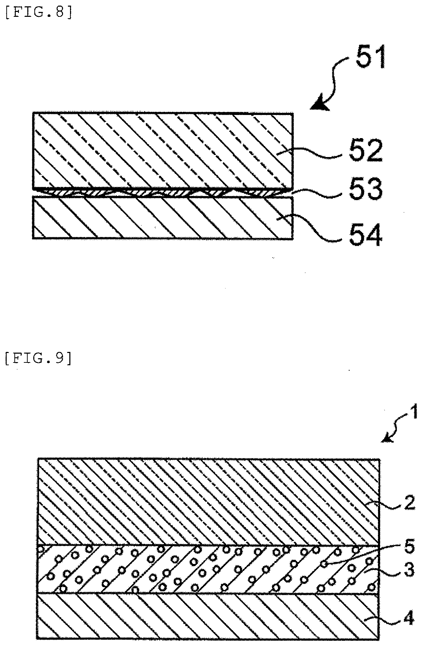

As shown in Fig. 8, another examples of the embodiment include a cooking device top plate 51 including a crystallized glass substrate 52 having irregularities on a surface thereof, a light blue glass coating layer as a color tone adjusting layer 54, and a brightness enhancing layer 53 between the crystallized glass substrate 52 and the color tone adjusting layer 54. Although not shown in Fig. 8, a second glass substrate or the like to be described later may be formed on the lower surface of the color tone adjusting layer 54 for the purpose of further enhancing the mechanical strength, for example.

The degree of the irregularities is not particularly limited as long as voids are preferably formed so as to satisfy the ratio of the voids, and the range of a surface roughness (arithmetic average roughness) Ra is not particularly limited.

When the brightness enhancing layer is a void-containing layer formed by providing irregularities on the surface of the crystallized glass substrate or the color tone adjusting layer, the region of the brightness enhancing layer refers to a range of a maximum height (Rz) that is a sum of a maximum peak height (Rp) and a maximum valley depth (Rv) in the cross section of the crystallized glass substrate or the color tone adjusting layer provided with the irregularities.

The brightness enhancing layer is preferably transparent or translucent from the viewpoint of visually recognizing the color tone adjusting layer. The translucence means that the transmittance of visible light is 20% or more and 80% or less. That is, the "transparency" of the brightness enhancing layer means that the transmittance of visible light is 20% or more.

In the first embodiment, it is particularly preferable that the brightness enhancing layer is a void-containing layer, contains a glass component as a main component, particularly $Li_2O$-$Al_2O_3$-$SiO_2$ as a main component, and is transparent or translucent.

The difference in refractive index from the crystallized glass substrate may be controlled by adjusting the thickness of the brightness enhancing layer. The thickness of the brightness enhancing layer is preferably 800 nm or more from the viewpoint of further enhancing a brightness enhancing effect. The thickness of the brightness enhancing layer is more preferably 1 $\mu$m or more. The thickness of the brightness enhancing layer can be, for example, 1 mm or less, for example, 500 $\mu$m or less, further for example, 100 $\mu$m or less, and further for example, 80 $\mu$m or less. For example, from the viewpoint of further suppressing the peeling and cracks and the like of the brightness enhancing layer, the thickness of the brightness enhancing layer can be, for example, 10 um or less.

As an example of the method for forming the brightness enhancing layer, for example, an inorganic coating material such as a paste containing a glass composition is applied by screen printing or the like, dried, and then baked in a range of 550 to 900°C, for example, in a range of 700 to 900°C. As another example of the method for forming the brightness enhancing layer, when an organic coating material is applied, the organic coating material is dried, and then baked within a range of 250 to 400°C. For example, when the brightness enhancing layer and the color tone adjusting layer are formed of an inorganic material such as an inorganic coating material, baking is performed at, for example, 700 to 900°C at the time of forming the color tone adjusting layer after forming the brightness enhancing layer, so that the baking can be omitted at the time of forming the brightness enhancing layer.

When the void-containing layer is formed as the brightness enhancing layer, examples of a method for forming the void-containing layer include the following method. When particles such as hollow particles are used for forming the void-containing layer, for example, a paste containing the hollow particles and a binder is applied by screen printing or the like, dried, and then baked at the above temperature depending on the material to be used at the time of forming the brightness enhancing layer or the color tone adjusting layer.

When a foam material is used for forming the void-containing layer to form a porous layer, a mixed material containing a glass material, a ceramic material, and, for example, a polymer material that foams at a high temperature is applied onto a crystallized glass substrate by screen printing or the like, dried, and then baked at the above temperature depending on the material to be used at the time of forming the brightness enhancing layer or the color tone adjusting layer, whereby the polymer material can be caused to foam to form a porous brightness enhancing layer.

When spacers are used for forming the void-containing layer, the spacers are disposed on a crystallized glass substrate at desired intervals with an adhesive interposed therebetween, and a color tone adjusting layer is further laminated on the crystallized glass substrate with an adhesive interposed therebetween to provide a hollow layer as the brightness enhancing layer.

When irregularities are provided on the lower surface of the crystallized glass, the lower surface of the crystallized glass is roughened. Examples of the purpose of providing the irregularities on the lower surface of the crystallized glass include enhancement of a reflectance and formation of the void-containing layer. When the purpose is to increase the reflectance, for example, the roughening is performed such that the surface roughness Ra of the lower surface of the crystallized glass substrate is 0.1 $\mu$m or more. Although the brightness is enhanced as the surface roughness Ra increases, in order to increase the reflectance, the surface roughness Ra is preferably small, for example, 10 $\mu$m or less

from the viewpoint of setting Ra to a wavelength level size, that is, a size on the order of submicron, and from the viewpoint of maintaining the durability of the crystallized glass substrate against impact. Meanwhile, when the purpose is to form the void-containing layer, as described above, voids may be preferably formed so as to satisfy the ratio of the voids, and the range of Ra is not particularly limited.

The method of the roughening treatment is divided into a physical method and a chemical method. Examples of the physical method include sand blasting using silicon carbide (SiC), alumina ($Al_2O_3$), zirconia ($ZrO_2$), and diamond (C) and the like as a grind stone, and free abrasive polishing using a polishing agent. Examples of the chemical method include a method for immersing in an etching solution containing hydrofluoric acid.

When irregularities are provided on the upper surface of the color tone adjusting layer, the method is not particularly limited. For example, as described later, the color tone adjusting layer having irregularities is formed by using a second glass substrate for securing the mechanical strength, providing irregularities on the second glass substrate, and forming the color tone adjusting layer along the irregularities.

[Bright Material/Reflective Material]

As one embodiment of the present invention, as schematically shown in Fig. 9, from the viewpoint of further increasing the reflectance at the interface between the crystallized glass substrate 2 and the brightness enhancing layer 3 to further enhance the brightness, one or more (also referred to as "bright material and/or reflective material") 5 of the reflective material and the bright material may be contained in the brightness enhancing layer 3. By containing the bright material and/or reflective material 5, the difference in refractive index from the crystallized glass substrate 2 can be further increased.

Examples of the bright material include glass, aluminum, mica, silica (silicon dioxide), these materials having surfaces coated with metals or metal oxides, and a material in which a metal or a metal compound is vacuum-deposited on a polymer film, followed by powderizing. Among these, one or more selected from the group consisting of mica, aluminum flakes, glass particles, glass flakes, glass flakes including a vapor deposited metal layer, and mica including a metal oxide layer are preferable. The glass particles may be, for example, self-reflecting glass beads.

Examples of the shape of the bright material and/or reflective material 5 include a spherical shape, a square shape, a rod shape, a branch shape, and a flake shape. The size of the bright material and/or reflective material 5 is not particularly limited, and may be appropriately determined in consideration of a target reflectance. The size of the bright material and/or reflective material 5 may be an average particle size of 0.1 $\mu$m to 100 $\mu$m. The ratio of the bright material and/or reflective material 5 in the brightness enhancing layer 3 is also not particularly limited, and can be appropriately determined in consideration of the target reflectance.

As the bright material and/or reflective material 5, for example, bluish pearl mica or the like in which a metal or a metal oxide is coated on the surface of mica or the like is added in a small amount within a range in which the transparency of the brightness enhancing layer 3 can be maintained, whereby the adjustment of the color tone can be assisted while reflection characteristics are enhanced, which is preferable.

[Addition of Blue Pigment or The Like]

The brightness enhancing layer may contain a blue pigment that can be used for forming the color tone adjusting layer within a range in which the transparency of the brightness enhancing layer can be maintained. When the brightness enhancing layer contains the blue pigment, the adjustment of the color tone by the color tone adjusting layer can be assisted.

(Color Tone Adjusting Layer of First Embodiment)

As described above, in order to eliminate the yellowness of the crystallized glass substrate, the color tone adjusting layer containing the blue pigment and the white pigment is formed. The type, blending amount, and color tone and the like of the pigment can be optionally selected by the designer. Examples of the method for adjusting the color tone include selecting the type of a blue pigment, and controlling the ratio of a blue pigment and a white pigment in a mixed pigment containing the blue pigment and the white pigment.

For the purpose of achieving a color tone which is shown when a white coating material is applied to a conventional borosilicate glass substrate by adjusting the color tone in the color tone adjusting layer, the present inventors conducted a preliminary experiment as follows.

By simulating the color tone adjusting layer, white paper (Kent paper: Konayuki 210 manufactured by JITSUTA Corporation) and blue-white printing papers obtained by printing coating materials obtained by blending pigments at blending ratios shown in Table 1 on the same white paper as described above were prepared. Samples in which the crystallized glass substrate (Neoceram N-0 manufactured by Nippon Electric Glass Co., Ltd.) was placed on each of the white paper and the blue-white printing paper are prepared. The surface side of the crystallized glass substrate of each of the samples was subjected to color measurement. In the color measurement, the color tone of the obtained sample was measured as a color system Lab value using a spectrophotometric colorimeter (CM-2600d manufactured by KONICA MINOLTA, INC.). A color difference from a base material obtained by printing the lower surface of a target borosilicate glass substrate with a white ink (hereinafter, referred to as a (borosilicate glass + white ink) base material) was also measured. The results are shown in Fig. 1.

[Table 1]

| No. | Glass substrate | Color tone adjusting paper | Blending ratio (g) | | | Lab value | | | Color difference from (borosilicate glass + white ink) base material | | | |
|---|---|---|---|---|---|---|---|---|---|---|---|---|
| | | | White | Cobalt | Red | L | a | b | dE | dL | da | db |
| | (Borosilicate glass + white ink) base material | - | - | - | - | 52.6 | 1.1 | -1.2 | - | - | - | - |
| 1 | Crystallized glass substrate (Neoceram N-0) | Kent paper | - | - | - | 64.6 | 1.9 | 4.5 | 11.6 | 10.3 | 1.5 | 4.9 |
| 2 | | Co-15(1) | 10 | 0.1 | - | 62.1 | 0.0 | -0.3 | 8.2 | 8.1 | -0.9 | 0.8 |
| 3 | | Co-15(2) | 10 | 0.1 | - | 61.6 | -0.1 | -1.1 | 7.8 | 7.8 | -0.8 | 0.0 |
| 4 | | Co-15R1 | 10 | 0.1 | 0.01 | 61.5 | 0.1 | -1.1 | 7.5 | 7.5 | 0.0 | 0.0 |
| 5 | | Co-15R2 | 10 | 0.1 | 0.01 | 61.6 | 0.0 | -0.7 | 7.5 | 7.5 | -0.2 | 0.1 |

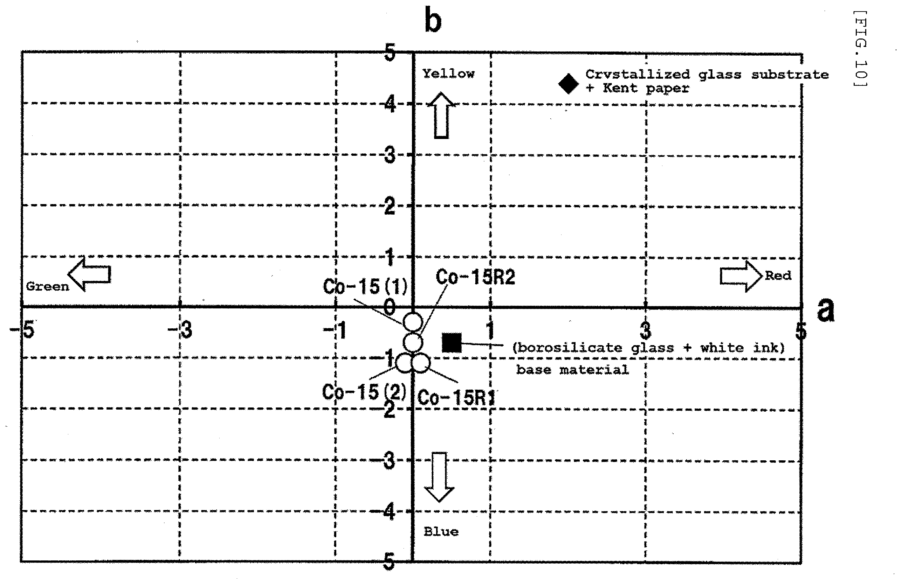

Furthermore, Fig. 10 is a graph showing the color difference from the (borosilicate glass + white ink) base material based on the results in Table 1. In Fig. 10, the brightness is represented in a direction perpendicular to a paper surface. A black square in Fig. 10 indicates the value of the (borosilicate glass + white ink) base material, and the value is preferably closer to the black square. From the results shown in Fig. 10, the color tone of the crystallized glass substrate + Kent paper (black rhombus in Fig. 10) as No. 1 in Table 1 was considerably far from the black square as the target value. Meanwhile, as shown in Nos. 2 to 4 in Table 1, when the blue-white printing paper was disposed on the lower surface of the crystallized glass substrate (Neoceram N-0), the values were sufficiently close to the black square as the target value. From this result, it has been found that slight blue, that is, coloration located downward in Fig. 10 is likely to look white.

Examples of the blue pigment include a blue inorganic pigment, and examples of the blue inorganic pigment include blue inorganic pigments such as Prussian blue (ferric ferrocyanide), ultramarine blue, cobalt-based inorganic pigments (Co-Al-based, Co-Al-Si-based, Co-Zn-Si-based), V-Zr-Si-based inorganic pigments (turquoise blue), and manganese-based inorganic pigments. Examples of the white pigment include white inorganic pigments such as titanium oxide, cerium oxide, zinc oxide, and barium sulfate. Examples of commercially available products of the blue pigment and the white pigment include Hi-Color manufactured by Mitsuboshi Chemical Co., Ltd., XGL-HF screen ink manufactured by Teikoku Printing Inks Mfg. Co., Ltd., and decorative glass color HZ series manufactured by Okuno Chemical Industries Co., Ltd. Furthermore, in order to adjust the color tone, a red inorganic pigment such as iron oxide, iron hydroxide, or iron titanate may be contained as a red pigment. The coloring pigments can be mixed at an optional ratio so as to obtain a desired color tone. The pigments are not limited to those listed here.

As one embodiment of the present invention, preferably, by providing a brightness enhancing layer having a refractive index smaller than that of the crystallized glass substrate, the volume ratio of the blue pigment in the color tone adjusting layer can be reduced, and for example, can be set to 5% or less in the color tone adjusting layer. As a result, the enhancement of the brightness and the suppression of the yellowness can be more easily achieved.

As another embodiment of the present invention, when a cooking device top plate having a high reflectance is achieved, for example, when the reflectance at the interface between the crystallized glass substrate and the brightness enhancing layer is 70% or more, the amount of light reaching the color tone adjusting layer 4 is 30% or less of the amount of incident light, which is small. In such a case, the color tone adjusting layer is preferably dark blue from the viewpoint of reliably eliminating the yellowness of the crystallized glass to bring the crystallized glass closer to white. For example, blue having a b-value of less than -1 in the Lab value of the color tone adjusting layer alone is selected, or the ratio of the white pigment to be mixed with the blue pigment is reduced.

Examples of the coating material for forming the color tone adjusting layer include an inorganic coating material containing an inorganic material such as a glass component, a solvent, and the inorganic pigment as main components, and an organic coating material containing an organic resin, a solvent, and the inorganic pigment as main components. Examples of the organic resin contained in the organic coating material include a silicone resin, a modified silicone resin such as an acrylic-modified silicone resin, and a urethane-based resin, and a silicone resin is preferable from the viewpoint of securing heat resistance.

When the color tone adjusting layer is formed using an inorganic coating material, the color tone adjusting layer may contain a glass component in addition to the pigment. The color tone adjusting layer preferably exhibits low-thermal expansibility as with the crystallized glass substrate. From this viewpoint, it is preferable that the color tone adjusting layer is formed of an inorganic coating material containing an inorganic material such as a glass component and a solvent as main components, and contains the glass component as a main component. For example, the color tone adjusting layer preferably has a component composition close to that of the crystallized glass substrate. For example, the component composition of the color tone adjusting layer is adjusted in a batch raw material by changing the ratios of $SiO_2$, $Al_2O_3$, $Li_2O$, $TiO_2$, $ZrO_2$, $P_2O_5$, $BaO$, $Na_2O+K_2O$, and $As_2O_3$ and the like that may exist in the composition of glass constituting the crystallized glass substrate.

The thickness of the color tone adjusting layer can be set to, for example, 0.1 um or more in order to sufficiently enhance an effect of eliminating the yellowness of the crystallized glass substrate. The thickness of the color tone adjusting layer can be set to, for example, 100 um or less, for example, 50 $\mu$m or less, and from the viewpoint of further suppressing the peeling and cracks and the like of the color tone adjusting layer, the thickness of the color tone adjusting layer can be set to, for example, 10 $\mu$m or less.

As an example of the method for forming the color tone adjusting layer, for example, when the color tone adjusting layer is formed using an inorganic coating material, the pigment, a glass component, and a binder containing an ethyl cellulose-based resin or a nitrocellulose-based resin are mixed to form a paste. The paste is applied to the lower surface of the brightness enhancing layer, that is, the surface of the brightness enhancing layer opposite to the crystallized glass substrate side by screen printing, dried, and then baked at 550 to 900°C. As another example of the method for forming the color tone adjusting layer, when an organic coating material is applied, the organic coating material is dried, and then baked within a range of 250 to 400°C. When the color tone adjusting layer is formed together with the brightness enhancing layer, a method can be adopted, in which the brightness enhancing layer is applied by screen printing or the like and dried, and the color tone adjusting layer is then applied by screen printing or the like, dried, and fired at the above temperature.

[Crystallized Glass Substrate]

In the present disclosure, in any of the embodiments including the first embodiment, a crystallized glass substrate containing $Li_2O$-$Al_2O_3$-$SiO_2$ as a main component and a transition element is used. Glass constituting the substrate preferably contains one or more kinds of low-expansion crystals such as $\beta$-quartz, $\beta$-spodumene, aluminum titanate, and cordierite. Furthermore, those containing a $\beta$-quartz solid solution or a $\beta$-spodumene solid solution as a main crystal are more preferable.

In the crystallized glass, a $\beta$-quartz solid solution crystal exhibiting negative expansion characteristics and a remaining glass layer exhibiting positive expansion characteristics cancel each other, whereby the thermal expansion coefficient of the entire crystallized glass can be kept low. As the low-thermal expansibility, for example, the absolute value of the thermal expansion coefficient is $30\times10^{-7}/°C$ or lower.

The thickness of the crystallized glass substrate can be set to, for example, 3 mm to 10 mm. The refractive index of the crystallized glass substrate is, for example, about 1.4 to 2.0.

[Roughening of Lower Surface of Crystallized Glass Substrate]

As one embodiment of the present invention, in any embodiment including the first embodiment, by roughening the lower surface of the crystallized glass substrate, that is, the surface of the crystallized glass substrate on a side opposite to a cooking side, diffuse reflection of light is generated to increase the reflectance, and as a result, the brightness can be enhanced.

When the purpose is to increase the reflectance, for example, the roughening is performed such that the surface roughness Ra of the lower surface of the crystallized glass substrate is 0.1 um or more. As the surface roughness Ra increases, the brightness is enhanced, but from the viewpoint of maintaining the durability of the crystallized glass substrate against impact, the surface roughness Ra is preferably smaller, for example, 10 $\mu$m or less.

The method of the roughening treatment is divided into a physical method and a chemical method. Examples of the physical method include sand blasting using silicon carbide (SiC), alumina ($Al_2O_3$), zirconia ($ZrO_2$), and diamond (C) and the like as a grind stone, and free abrasive polishing using a polishing agent. Examples of the chemical method include a method for immersing in an etching solution containing hydrofluoric acid.

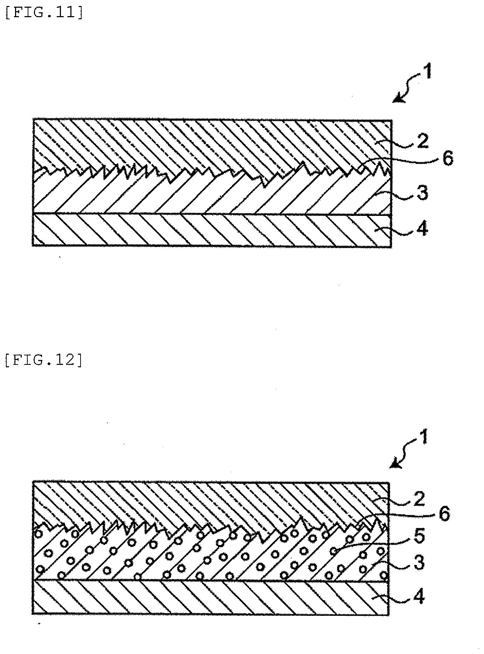

Fig. 11 is a schematic cross-sectional view of a cooking device top plate shown as an embodiment of the present invention. In Fig. 11, the interface between a crystallized glass substrate 2 and a brightness enhancing layer 3 is a roughened surface 6. In a cooking device top plate 1 in Fig. 11, the brightness enhancing layer 3 is formed on the roughened surface 6 after the lower surface of the crystallized glass substrate 2 is roughened. In Fig. 11, the reflection at the interface between the crystallized glass substrate 2 and the brightness enhancing layer 3 is larger than that in Fig. 2, whereby the brightness can be further enhanced.

Fig. 12 is a schematic cross-sectional view of a cooking device top plate shown as an embodiment of the present invention. In the embodiment of Fig. 12, the interface between a crystallized glass substrate 2 and a brightness enhancing layer 3 is a roughened surface, and as with the embodiment of Fig. 9, a bright material and/or reflective material 5 is dispersed in the brightness enhancing layer 3. In a cooking device top plate 1 in Fig. 12, the brightness enhancing layer 3 containing the bright material and/or reflective material 5 is formed on a roughened surface 6 after the lower surface of the crystallized glass substrate 2 is roughened. In Fig. 12, due to the reflection at the interface between the crystallized glass substrate 2 and the brightness enhancing layer 3 and the diffuse reflection of light provided by the bright material and/or reflective material 5 in the brightness enhancing layer 3, the reflection is further increased as compared with Figs. 2, 9, and 11, whereby the brightness can be further enhanced.

(Second Embodiment)

In the second embodiment, a substrate color improving layer includes a brightness enhancing layer containing a blue pigment, and a color tone adjusting layer provided on the lower surface of the brightness enhancing layer, the color tone adjusting layer containing a white pigment. In detail, a cooking device top plate of the second embodiment includes the following (i) crystallized glass substrate and (ii) substrate color improving layer:

(i) the crystallized glass substrate containing $Li_2O$-$Al_2O_3$-$SiO_2$ as a main component and a transition element; and
(ii) the substrate color improving layer including
(ii-1) the brightness enhancing layer provided on the lower surface of the crystallized glass substrate, the brightness enhancing layer having a refractive index smaller than that of the crystallized glass substrate or not less than a refractive index of the crystallized glass substrate +0.1, and containing the blue pigment, and
(ii-2) the color tone adjusting layer provided on the lower surface of the brightness enhancing layer, the color tone adjusting layer containing a white pigment.

According to the second embodiment, as described above, the brightness is enhanced as compared with the configuration of Fig. 1 which consists of the crystallized glass substrate and the colored layer.

[Substrate Color Improving Layer of Second Embodiment]

(Brightness Enhancing Layer of Second Embodiment)

Also in the present embodiment, as with the first embodiment, the refractive index of the brightness enhancing layer is set to be smaller than that of the crystallized glass substrate or to be not less than the refractive index of the crystallized glass substrate +0.1. In the second embodiment, the refractive index of the brightness enhancing layer is preferably smaller than that of the crystallized glass substrate.

In the second embodiment, the brightness enhancing layer contains the blue pigment. The content of the blue pigment contained in the brightness enhancing layer may be within a range in which the transparency of the brightness enhancing layer can be maintained. For example, the volume ratio of the blue pigment can be in the range of 0.5% or more and 50% or less, and further, for example, in the range of 0.5% or more and 10% or less in the brightness enhancing layer. As the blue pigment, the blue pigment used for forming the color tone adjusting layer of the first embodiment can be used.

The configuration of the brightness enhancing layer of the second embodiment except that the blue pigment is essential is the same as that of the brightness enhancing layer of the first embodiment. In the second embodiment, the brightness enhancing layer is preferably a void-containing layer. Also in the second embodiment, as with the first embodiment, the brightness enhancing layer is preferably formed of an inorganic coating material containing an inorganic material such as a glass component and a solvent as main components, and contains a glass component as a main component, and more preferably has a component composition close to that of the crystallized glass substrate as described in the first embodiment. In the second embodiment, it is particularly preferable that the brightness enhancing layer is a void-containing layer, contains a glass component as a main component, particularly $Li_2O$-$Al_2O_3$-$SiO_2$ as a main component, and is transparent or translucent.

(Color Tone Adjusting Layer of Second Embodiment)

In the present embodiment, the brightness enhancing layer and the color tone adjusting layer are contained as a layer constituting the substrate color improving layer as with the first embodiment. However, in the second embodiment, the brightness enhancing layer contains the blue pigment, whereby, unlike the first embodiment, it is not essential that the color tone adjusting layer contains the blue pigment, and the color tone adjusting layer may contain the white pigment. The color tone adjusting layer of the second embodiment may contain only the white pigment as a pigment, or may contain the white pigment and a pigment other than white. As the white pigment and the pigment other than white, the pigment used for forming the color tone adjusting layer of the first embodiment can be used. Also in the second embodiment, as with the first embodiment, the color tone adjusting layer is preferably formed of an inorganic coating material containing an inorganic material such as a glass component and a solvent as main components, and contains a glass component as a main component, and more preferably has a component composition close to that of the crystallized glass substrate as described in the first embodiment.

The color tone adjusting layer of the second embodiment may contain the blue pigment. This case may have the same aspect as that in the case where the brightness enhancing layer selectively contains the blue pigment in the first embodiment.

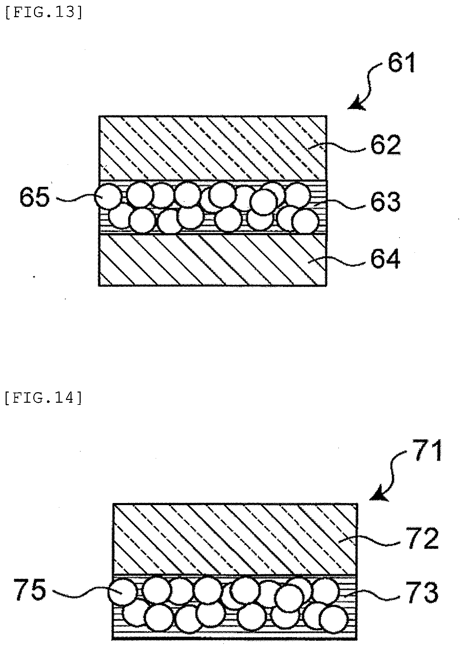

Examples of an embodiment of the second embodiment include a cooking device top plate 61 having a configuration in which a crystallized glass substrate 62, a layer containing hollow glass 65 and a blue pigment as a brightness enhancing layer 63, and a white organic coating material layer formed as a color tone adjusting layer 64 are laminated, as shown in Fig. 13. Although not shown in Fig. 13, for example, a light shielding layer or the like may be formed on the lower surface of the color tone adjusting layer 64.

(Third Embodiment)

In the third embodiment, the substrate color improving layer is formed of a brightness enhancing layer containing a blue pigment. In detail, a cooking device top plate of the third embodiment includes the following (i) crystallized glass substrate and (ii) substrate color improving layer:

(i) the crystallized glass substrate containing $Li_2O$-$Al_2O_3$-$SiO_2$ as a main component and a transition element; and
(ii) the substrate color improving layer provided on the lower surface of the crystallized glass substrate, the substrate color improving layer formed of a brightness enhancing layer having a refractive index smaller than that of the crystallized glass substrate or not less than a refractive index of the crystallized glass substrate + 0.1, the brightness enhancing layer containing the blue pigment.

According to the third embodiment, as described above, the brightness is enhanced as compared with the configuration of Fig. 1 consisting of the crystallized glass substrate and the colored layer.

[Substrate Color Improving Layer of Third Embodiment (Brightness Enhancing Layer of Third Embodiment)]

Also in the present embodiment, the refractive index of the brightness enhancing layer is smaller than that of the crystallized glass substrate or not less than the refractive index of the crystallized glass substrate +0.1. In the third embodiment, the refractive index of the brightness enhancing layer is preferably smaller than that of the crystallized glass substrate. In the third embodiment, the substrate color improving layer is formed of the brightness enhancing layer having the refractive index, and does not include a color tone adjusting layer unlike the first embodiment and the second embodiment. Since the refractive index of the brightness enhancing layer is preferably smaller than that of the crystallized glass substrate in the third embodiment, the effect of light extraction of the crystallized glass substrate is sufficiently enhanced, whereby the brightness can be enhanced.

In the third embodiment, the brightness enhancing layer contains the blue pigment. The content ratio of the blue pigment in the brightness enhancing layer is preferably 0.1% by mass or more from the viewpoint of improvement in whiteness. Meanwhile, the upper limit of the content of the blue pigment contained in the brightness enhancing layer may be any value as long as the transparency of the brightness enhancing layer can be maintained. In the third embodiment, the ratio of the pigment containing the blue pigment and contained in the brightness enhancing layer is preferably less than 40% by mass. That is, the ratio of the blue pigment contained in the brightness enhancing layer is preferably less than 40% by mass, more preferably 20% by mass or less, still more preferably 15% by mass or less, and yet still more preferably 10% by mass or less. As the blue pigment, the blue pigment used for forming the color tone adjusting layer of the first embodiment can be used.

The configuration of the brightness enhancing layer of the third embodiment except that the blue pigment is essential is the same as that of the brightness enhancing layer of the first embodiment. In the third embodiment, the brightness enhancing layer is preferably a void-containing layer. Also in the third embodiment, as with the first embodiment, the brightness enhancing layer is preferably formed of an inorganic coating material containing an inorganic material such as a glass component and a solvent as main components, and contains a glass component as a main component, and more preferably has a component composition close to that of the crystallized glass substrate as described in the first embodiment. In the third embodiment, it is particularly preferable that the brightness enhancing layer is a void-containing layer, contains a glass component as a main component, particularly $Li_2O$-$Al_2O_3$-$SiO_2$ as a main component, and is transparent or translucent.

In the third embodiment, only the brightness enhancing layer is required to totally reflect the incident light, whereby the brightness enhancing layer tends to be thicker than the brightness enhancing layers of the first embodiment and the second embodiment although depending on the material constituting the brightness enhancing layer. For example, the thickness of the brightness enhancing layer is 1.5 to 2.5 times the thickness of the brightness enhancing layer of each of the first embodiment and the second embodiment.

Examples of an embodiment of the third embodiment include a cooking device top plate 71 having a configuration in which a crystallized glass substrate 72, and a layer containing a large number of hollow glasses 75 and a blue pigment as a brightness enhancing layer 73 are laminated, as shown in Fig. 14. Although not shown in Fig. 14, for example, a light shielding layer or the like may be formed on the lower surface of the brightness enhancing layer 73.

(Light Shielding Layer)

In any of the first to third embodiments, a light shielding layer may be further provided as necessary on the lower surface of the substrate color improving layer, specifically, the lower surface of the brightness enhancing layer or the color tone adjusting layer. The light shielding layer may be formed by applying, for example, a heat-resistant coating material to the lower surface of the color tone adjusting layer. As the heat-resistant coating material, a mixture obtained by adding an inorganic pigment for coloring to a heat-resistant resin containing a silicone resin, a polyamide resin, a fluororesin, or a composite thereof can be used. In consideration of heat resistance, a layer coated with an ink containing a glassy component containing $SiO_2$, $Al_2O_3$, or $Li_2O$ or the like, which is a component close to that of the crystallized glass substrate, as a main component, and a black inorganic pigment ($Fe_2O_3$-based, $MnO_2$-based, $CuO$-based, or $Co_2O_3$-based metal oxide pigment) as a pigment for light shielding may be provided on the lower surface of the color tone adjusting layer as necessary.

(Second Glass Substrate)

In any of the first to third embodiments, separately from the crystallized glass substrate constituting the outermost surface of the cooking device top plate, a tempered glass substrate and a crystallized glass substrate may be further formed as the second glass substrate on the lower surface of the substrate color improving layer, specifically, on the lower surface of the brightness enhancing layer or the color tone adjusting layer as necessary.

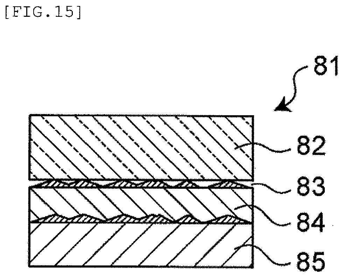

The upper surface of the second glass substrate may be roughened by the same method as the roughening of the crystallized glass substrate. As described above, in a method for providing irregularities on the upper surface of the color tone adjusting layer, the upper surface of the second glass substrate is roughened to provide the irregularities, and the color tone adjusting layer (light blue glass coating material layer) is formed along the irregularities, whereby the color tone adjusting layer having the irregularities on the upper surface can be formed. For example, as shown in Fig. 15, a cooking device top plate 81 can be formed, in which a brightness enhancing layer 83 is formed as a void-containing layer between a color tone adjusting layer 84 provided on the upper surface of a second glass substrate 85 having irregularities and having irregularities on the upper surface and a crystallized glass substrate 82.

Examples

Hereinafter, the present invention will be more specifically described with reference to Examples. The present invention is not limited by the following Examples, and can also be implemented with appropriate modifications within the scope of the appended claims. Any of them is included in the technical scope of the present invention.

(Example 1)

The surface of a crystallized glass substrate (Neoceram N-0 manufactured by Nippon Electric Glass Co., Ltd., thickness: 4 mm) was roughened by a blast treatment using $Al_2O_3$ particles to set Ra to 0.1 um or more. Next, as a clear ink, a paste was prepared, which was obtained by kneading a glass component: $Li_2O$-$Al_2O_3$-$SiO_2$ contained as a main component, a solvent (cyclohexanone and toluene and the like), and an acrylic binder (KC-1100 manufactured by Kyoeisha Chemical Industry Co., Ltd.) as a binder. The paste further containing mica (thickness: several micrometers, planar size: average particle size: 50 um, addition ratio: 20% by weight) as a bright material was screen-printed (180 mesh) on the roughened surface of the crystallized glass substrate, and dried at 180°C for 10 minutes to obtain a brightness enhancing layer before firing.

Each of a white pigment and a blue pigment was added to the above-described clear ink, followed by kneading to prepare an ink containing a white pigment and an ink containing a blue pigment as an ink for forming a color tone adjusting layer. In the present Example 1, 9.65 g of the ink containing a white pigment and 0.35 g of the ink containing a blue pigment were kneaded, and the kneaded product was screen-printed (180 mesh) on the surface of the brightness enhancing layer before firing, dried at 180°C for 10 minutes, and then baked by heating at 700°C for 10 minutes to obtain a laminate of the brightness enhancing layer (thickness: 20 um) and the color tone adjusting layer (thickness: 30 um) after firing. Thus, five samples simulating a cooking device top plate were prepared.

The crystallized glass substrate of each of the samples obtained as described above as the outermost surface was subjected to color measurement. In the color measurement, values of L, a, and b in a Lab color system were measured using a spectrophotometric colorimeter (CM-2600d manufactured by KONICA MINOLTA, INC.). A color difference from a (borosilicate glass + white ink) base material was also measured. The results are shown in Fig. 2. Table 2 also shows the Lab values of the (borosilicate glass + white ink) base materials.

[Table 2]

| Sample No. | Lab value | | | Color difference from (borosilicate glass + white ink) base material | | | |
|---|---|---|---|---|---|---|---|
| | L | a | b | dE | dL | da | db |
| (Borosilicate glass + white ink) base material | 52.2 | 0.5 | -0.7 | - | - | - | - |
| 1-1 | 53.7 | 2.0 | 3.5 | 4.1 | 1.2 | 1.8 | 3.4 |
| 1-2 | 53.8 | 1.7 | 3.3 | 4.0 | 1.5 | 1.0 | 3.6 |
| 1-3 | 53.5 | 2.3 | 3.6 | 4.5 | 1.1 | 2.4 | 3.6 |
| 1-4 | 53.1 | 1.3 | 2.8 | 3.5 | 0.9 | 0.9 | 3.2 |
| 1-5 | 53.4 | 1.3 | 3.4 | 4.4 | 1.4 | 0.5 | 4.1 |
| Average | 53.5 | 1.7 | 3.3 | 4.1 | 1.2 | 1.3 | 3.6 |

(Example 2)

Five samples simulating a cooking device top plate were prepared in the same manner as in Example 1 except that glass beads (average particle size: 50 um, addition ratio: 20% by weight) were used instead of mica as a bright material, and the film thickness of a brightness enhancing layer was made greater than the average particle diameter of the glass beads. As with Example 1, a color difference between the Lab value of the obtained sample and the (borosilicate glass + white ink) base material were measured. The results are shown in Table 3.

[Table 3]

| Sample No. | Lab value | | | Color difference from (borosilicate glass + white ink) base material | | | |
|---|---|---|---|---|---|---|---|
| | L | a | b | dE | dL | da | db |
| (Borosilicate glass + white ink) base material | 52.2 | 0.3 | -0.7 | - | - | - | - |
| 2-1 | 50.4 | 0.6 | 1.5 | 2.7 | -2.1 | -0.8 | 1.3 |
| 2-2 | 50.1 | 0.8 | 1.0 | 2.4 | -1.7 | 0.2 | 1.6 |
| 2-3 | 50.1 | 0.8 | 1.0 | 2.6 | -2.4 | 0.4 | 0.7 |
| 2-4 | 49.9 | 0.5 | 1.0 | 2.6 | -2.0 | 0.6 | 1.5 |
| 2-5 | 50.1 | 0.2 | 1.5 | 2.4 | -1.7 | 0.2 | 1.6 |
| Average | 50.1 | 0.6 | 1.2 | 2.5 | -2.0 | 0.1 | 1.3 |

From Tables 2 and 3, according to the embodiment of the present invention, a color tone close to white that has been achieved by a conventional borosilicate glass substrate was able to achieve. In particular, according to the preferred embodiment in which the glass beads were used as the bright material as in Example 2, it was confirmed that when dE as the color difference between the sample and the (borosilicate glass + white ink) base material is smaller and the b value is smaller, a color tone almost the same as that of white that has been achieved by the conventional borosilicate glass substrate is exhibited.

(Example 3)

1 g of Glass Bubbles iM30K manufactured by 3M Company, and 1 g of a clear ink containing a silicone resin and a solvent as main components as a binder were each weighed with an electronic balance, and mixed with a spatula. The resulting mixture was screen-printed on a crystallized glass substrate (Neoceram N-0 manufactured by Nippon Electric Glass Co., Ltd., size: 10 cm square, thickness: 4 mm) using a mask having a mesh number of #100 and a film thickness of 22 um, and dried in a thermostatic chamber at 160°C for 10 minutes to obtain a brightness enhancing layer before firing.
A light blue ink was screen-printed on the brightness enhancing layer before firing using a mask having a mesh number of #100 and a film thickness of 22 um. The light blue ink contained 9 g of an ink (white organic coating material) containing a silicone resin, a solvent, and titanium oxide as a white inorganic pigment, and 1 g of an ink (blue organic coating material) containing a silicone resin, a solvent, and a cobalt compound as a blue inorganic pigment such that the mass ratio of the white organic coating material and the blue organic coating material was 90:10 and the volume ratio thereof was also approximately 90:10. Next, the resulting product was dried in a thermostatic chamber at 160°C for 10 minutes, and fired in a small box furnace at 250 to 300°C for 1 hour to form a laminate of the brightness enhancing layer (thickness: 50 um) and the color tone adjusting layer (thickness: 30 um) after firing on the crystallized glass substrate. Thus, a sample simulating a cooking device top plate was prepared.
As Comparative Example 3, a sample simulating a cooking device top plate was prepared in the same manner as in Example 3 except that the brightness enhancing layer was not provided.

(Example 4)

1 g of Glass Bubbles iM30K manufactured by 3M Company, and 1 g of a paste containing a glass component: $Li_2O$-$Al_2O_3$-$SiO_2$ as a main component and a solvent as a binder were each weighed with an electronic balance, and mixed with a spatula. The resulting mixture was screen-printed on a crystallized glass substrate (Neoceram N-0 manufactured by Nippon Electric Glass Co., Ltd., size: 10 cm square, thickness: 4 mm) using a mask having a mesh number of #100 and a film thickness of 22 um, and dried in a thermostatic chamber at 160°C for 10 minutes to obtain a brightness enhancing layer before firing.
A light blue ink was screen-printed on the brightness enhancing layer before firing using a mask having a mesh number of #100 and a film thickness of 22 um. The light blue ink contained 9.7 g of an ink (white inorganic coating material) containing a glass paste containing a glass component: $Li_2O$-$Al_2O_3$-$SiO_2$ and titanium oxide as a white inorganic pigment, and 0.3 g of an ink (blue inorganic coating material) containing a glass paste containing a glass component: $Li_2O$-$Al_2O_3$-$SiO_2$ and a cobalt compound as a blue inorganic pigment such that the mass ratio of the white organic coating material and the blue organic coating material was 97:3 and the volume ratio thereof was also approximately 97:3. Next, the resulting product was dried in a thermostatic chamber at 160°C for 10 minutes, and fired in a small box furnace at 600 to 700°C for 10 minutes to form a laminate of the brightness enhancing layer (thickness: 50 um) and the color tone adjusting layer (thickness: 30 um) after firing on the crystallized glass substrate. Thus, a sample simulating a cooking device top plate was prepared.
As Comparative Example 4, a sample simulating a cooking device top plate was prepared in the same manner as in Example 4 except that the brightness enhancing layer was not provided.

(Refractive Index of Brightness Enhancing Layer)

A refractive index was determined by the above-described method using a spectroscopic ellipsometer. When the brightness enhancing layer was a void-containing layer, the refractive index was determined according to the ratio of voids as described above. As a result, while the refractive index of the crystallized glass substrate was 1.54, the refractive indexes of the brightness enhancing layers in Examples 1 and 2 were respectively 1.4 and 1.5. Meanwhile, the refractive indexes of the brightness enhancing layers in Examples 3 and 4 were respectively 1.3 and 1.2. These results show that when the brightness enhancing layer is preferably the void-containing layer, the refractive index of the brightness enhancing layer becomes closer to the refractive index of 1.0 of an air layer, whereby a light extraction ratio in the crystallized glass substrate is increased as described above, and further improvement in brightness and suppression of yellowness can be achieved. It is difficult to measure the refractive index of only the color tone adjusting layer. However, theoretically, in Comparative Example 3, the refractive index of the color tone adjusting layer is calculated to be about 2.3 based on the fact that the refractive indexes of a pigment and silicone resin are respectively about 2.7 and about 1.4, and the pigment is contained in an amount of about 30% by volume with respect to the silicone resin. In Comparative Example 4, the refractive index of the color tone adjusting layer is calculated to be about 1.8 based on the fact that the pigment is contained in an amount of about 30% by volume with respect to the glass component.

(Measurement of L Value)

The crystallized glass substrates of the samples obtained in Examples 3 and 4 as the outermost surface as described above were subjected to color measurement. In the color measurement, a color space L\*a\*b\* was measured using a color difference meter (CR410 manufactured by KONICA MINOLTA, INC.). As a result, the L value indicating brightness was 70 in Comparative Example 3, and was 73 in Example 3. From this result, it can be seen that by providing the substrate color improving layer composed of the layer containing hollow glass as the brightness enhancing layer and the color tone adjusting layer formed of the organic coating material on the lower surface of the crystallized glass substrate, the brightness can be sufficiently enhanced as compared with the case where the color tone adjusting layer formed of the organic coating material is directly formed on the lower surface of the crystallized glass substrate.

The L value of Example 4 was 79, and the L value of Example 5 was 74. From these results, as in Example 5, also when the brightness enhancing layer formed of the glass component was formed on the lower surface of the crystallized glass substrate, the brightness was enhanced. However, as in Example 4, by providing the substrate color improving layer composed of the layer having hollow glass as the brightness enhancing layer and the color tone adjusting layer formed of the glass component on the lower surface of the crystallized glass substrate, the brightness could be more sufficiently enhanced.

The present application claims priority based on Japanese Patent Application No. 2020-33278 filed on February 28, 2020 and Japanese Patent Application No. 2020-217694 filed on December 25, 2020.

Industrial Applicability

As described above, the present disclosure makes it possible to provide a cooking device top plate that contains crystallized glass exhibiting high strength and low-thermal expansibility as a substrate and exhibits white. Therefore, it is possible to provide a tabletop type, stationary type, or built-in type cooking device that exhibits white and is used in a dining table and a cooking table and the like of a general household, and a kitchen for business use, and the like.

Reference Signs List

1, 21, 31, 41, 51, 61, 71, 81 Cooking device top plate
2, 22, 32, 42, 52, 62, 72, 82 Crystallized glass substrate
3, 23, 33, 43, 53, 63, 73, 83 Brightness enhancing layer
4, 24, 34, 44, 54, 64, 74, 84 Color tone adjusting layer
5 Bright material and/or reflective material
6 Roughened surface
7 Light reflected at interface between crystallized glass substrate and brightness enhancing layer
8 Light reflected at interface between brightness enhancing layer and color tone adjusting layer
9 Colored layer of preliminary experiment sample (white + blue)
10 Light reflected at interface between crystallized glass substrate 2 and colored layer 9
11A Colored layer of preliminary experiment sample (white)
11B White paper in preliminary experiment sample
12 Air layer
25, 65, 75 Hollow glass
35 Spacer
36 Hollow layer
85 Second glass substrate

**Claims**

1. A white cooking device top plate (1, 21, 31, 41, 51, 61, 71, 81) comprising:

   a crystallized glass substrate (2, 22, 32, 42, 52, 62, 72, 82) containing $Li_2O$-$Al_2O_3$-$SiO_2$ as a main component and a transition element; and
   a substrate color improving layer provided on a lower surface of the crystallized glass substrate (2, 22, 32, 42, 52, 62, 72, 82), the substrate color improving layer containing a blue pigment and including a brightness enhancing layer (3, 23, 33, 43, 53, 63, 73, 83) having a refractive index smaller than that of the crystallized glass substrate (2, 22, 32, 42, 52, 62, 72, 82) or not less than a refractive index of the crystallized glass substrate (2, 22, 32, 42, 52, 62, 72, 82)+ 0.1.

2. The cooking device top plate (1, 21, 31, 41, 51, 61, 71, 81) according to claim 1, wherein the brightness enhancing layer (3, 23, 33, 43, 53, 63, 73, 83) contains the blue pigment.

3. The cooking device top plate (1, 21, 31, 41, 51, 61, 71, 81) according to claim 1, wherein the substrate color improving layer includes a color tone adjusting layer (4, 24, 34, 44, 54, 64, 74, 84) provided on a lower surface of the brightness enhancing layer (3, 23, 33, 43, 53, 63, 73, 83), the color tone adjusting layer (4, 24, 34, 44, 54, 64, 74, 84) containing a white pigment and the blue pigment.

4. The cooking device top plate (1, 21, 31, 41, 51, 61, 71, 81) according to claim 3, wherein the brightness enhancing layer (3, 23, 33, 43, 53, 63, 73, 83) contains the blue pigment.

5. The cooking device top plate (1, 21, 31, 41, 51, 61, 71, 81) according to claim 1,
   wherein:

   the substrate color improving layer includes the brightness enhancing layer (3, 23, 33, 43, 53, 63, 73, 83) containing the blue pigment; and
   the substrate color improving layer includes a color tone adjusting layer (4, 24, 34, 44, 54, 64, 74, 84) provided on a lower surface of the brightness enhancing layer (3, 23, 33, 43, 53, 63, 73, 83), the color tone adjusting layer (4, 24, 34, 44, 54, 64, 74, 84) containing a white pigment.

6. The cooking device top plate (1, 21, 31, 41, 51, 61, 71, 81) according to claim 1, wherein the substrate color improving layer is formed of the brightness enhancing layer (3, 23, 33, 43, 53, 63, 73, 83) containing the blue pigment.

7. The cooking device top plate (1, 21, 31, 41, 51, 61, 71, 81) according to any one of claims 1 to 6, wherein the brightness enhancing layer (3, 23, 33, 43, 53, 63, 73, 83) is a void-containing layer containing one or more of hollow particles and a porous material, or a void-containing layer in which irregularities are formed on a lower surface of the crystallized glass substrate (2, 22, 32, 42, 52, 62, 72, 82) so that voids can be secured.

8. The cooking device top plate (1, 21, 31, 41, 51, 61, 71, 81) according to any one of claims 3 to 5,

   wherein the brightness enhancing layer (3, 23, 33, 43, 53, 63, 73, 83) is
   a void-containing layer in which a spacer is provided between the crystallized glass substrate (2, 22, 32, 42, 52, 62, 72, 82) and the color tone adjusting layer (4, 24, 34, 44, 54, 64, 74, 84) so that voids can be secured, or
   a void-containing layer in which irregularities are formed on an upper surface of the color tone adjusting layer (4, 24, 34, 44, 54, 64, 74, 84) so that voids can be secured.

9. The cooking device top plate (1, 21, 31, 41, 51, 61, 71, 81) according to any one of claims 1 to 8, wherein the brightness enhancing layer (3, 23, 33, 43, 53, 63, 73, 83) contains one or more selected from the group consisting of mica, aluminum flakes, glass particles, glass flakes, glass flakes including a vapor deposited metal layer, and mica including a metal oxide layer.

10. The cooking device top plate (1, 21, 31, 41, 51, 61, 71, 81) according to any one of claims 1 to 9, wherein a lower surface of the crystallized glass substrate (2, 22, 32, 42, 52, 62, 72, 82) has a surface roughness Ra of 0.1 um or more and 10 $\mu$m or less.

11. The cooking device top plate (1, 21, 31, 41, 51, 61, 71, 81) according to any one of claims 1 to 10, wherein the brightness enhancing layer (3, 23, 33, 43, 53, 63, 73, 83) has a thickness of 800 nm or more.

12. The cooking device top plate (1, 21, 31, 41, 51, 61, 71, 81) according to any one of claims 1 to 11, wherein the brightness enhancing layer (3, 23, 33, 43, 53, 63, 73, 83) contains $Li_2O-Al_2O_3-SiO_2$ as a main component, and is transparent or translucent.

13. The cooking device top plate (1, 21, 31, 41, 51, 61, 71, 81) according to any one of claims 1 to 12, further comprising a light shielding layer provided on a lower surface of the substrate color improving layer.

14. The cooking device top plate (1, 21, 31, 41, 51, 61, 71, 81) according to any one of claims 1 to 13, wherein the brightness enhancing layer (3, 23, 33, 43, 53, 63, 73, 83) is a void-containing layer, contains $Li_2O-Al_2O_3-SiO_2$ as a main component, and is transparent or translucent.

**Patentansprüche**

1. Weiße Kochgeräte-Deckplatte (1, 21, 31, 41, 51, 61, 71, 81), die umfasst:

ein kristallisiertes Glassubstrat (2, 22, 32, 42, 52, 62, 72, 82), das $Li_2O-Al_2O_3-SiO_2$ als Hauptkomponente und ein Übergangselement enthält; und
eine Substratfarbverbesserungsschicht, die auf einer unteren Oberfläche des kristallisierten Glassubstrats (2, 22, 32, 42, 52, 62, 72, 82) vorgesehen ist, wobei die Substratfarbverbesserungsschicht ein blaues Pigment enthält und eine Helligkeitsverbesserungsschicht (3, 23, 33, 43, 53, 63, 73, 83) umfasst, die einen Brechungsindex aufweist, der kleiner ist als der des kristallisierten Glassubstrats (2, 22, 32, 42, 52, 62, 72, 82) oder nicht kleiner ist als ein Brechungsindex des kristallisierten Glassubstrats (2, 22, 32, 42, 52, 62, 72, 82) + 0,1.

2. Kochgeräte-Deckplatte (1, 21, 31, 41, 51, 61, 71, 81) nach Anspruch 1, wobei die Helligkeitsverbesserungsschicht (3, 23, 33, 43, 53, 63, 73, 83) das blaue Pigment enthält.

3. Kochgeräte-Deckplatte (1, 21, 31, 41, 51, 61, 71, 81) gemäß Anspruch 1, wobei die Substratfarbverbesserungsschicht eine Farbtonanpassungsschicht (4, 24, 34, 44, 54, 64, 74, 84) umfasst, die auf einer unteren Oberfläche der Helligkeitsverbesserungsschicht (3, 23, 33, 43, 53, 63, 73, 83) vorgesehen ist, wobei die Farbtonanpassungsschicht (4, 24, 34, 44, 54, 64, 74, 84) ein weißes Pigment und das blaue Pigment enthält.

4. Kochgeräte-Deckplatte (1, 21, 31, 41, 51, 61, 71, 81) nach Anspruch 3, wobei die Helligkeitsverbesserungsschicht (3, 23, 33, 43, 53, 63, 73, 83) das blaue Pigment enthält.

5. Kochgeräte-Deckplatte (1, 21, 31, 41, 51, 61, 71, 81) nach Anspruch 1,
wobei:

die Substratfarbverbesserungsschicht die Helligkeitsverbesserungsschicht (3, 23, 33, 43, 53, 63, 73, 83) umfasst, die das blaue Pigment enthält; und
die Substratfarbverbesserungsschicht eine Farbtonanpassungsschicht (4, 24, 34, 44, 54, 64, 74, 84) umfasst, die auf einer unteren Oberfläche der Helligkeitsverbesserungsschicht (3, 23, 33, 43, 53, 63, 73, 83) vorgesehen ist, wobei die Farbtonanpassungsschicht (4, 24, 34, 44, 54, 64, 74, 84) ein weißes Pigment enthält.

6. Kochgeräte-Deckplatte (1, 21, 31, 41, 51, 61, 71, 81) gemäß Anspruch 1, wobei die farbverbessernde Substratschicht aus der Helligkeitsverbesserungsschicht (3, 23, 33, 43, 53, 63, 73, 83) gebildet ist, die das blaue Pigment enthält.

7. Kochgeräte-Deckplatte (1, 21, 31, 41, 51, 61, 71, 81) nach einem der Ansprüche 1 bis 6, wobei die Helligkeitsverbesserungsschicht (3, 23, 33, 43, 53, 63, 73, 83) eine hohlraumhaltige Schicht ist, die ein oder mehrere Hohlpartikel und ein poröses Material enthält, oder eine hohlraumhaltige Schicht, in der Unregelmäßigkeiten auf einer unteren Oberfläche des kristallisierten Glassubstrats (2, 22, 32) gebildet sind, 42, 52, 62, 72, 82), damit Hohlräume verlässlich vorgesehen werden können.

8. Kochgeräte-Deckplatte (1, 21, 31, 41, 51, 61, 71, 81) nach einem der Ansprüche 3 bis 5,
wobei die Helligkeitsverbesserungsschicht (3, 23, 33, 43, 53, 63, 73, 83) ist:

eine hohlraumhaltige Schicht, in der ein Abstandshalter zwischen dem kristallisierten Glassubstrat (2, 22, 32, 42, 52, 62, 72, 82) und der Farbton-Einstellschicht (4, 24, 34, 44, 54) vorgesehen ist, 64, 74, 84), damit Hohlräume verlässlich vorgesehen werden können, oder

eine hohlraumhaltige Schicht, in der auf einer oberen Oberfläche der Farbtonanpassungsschicht (4, 24, 34, 44, 54, 64, 74, 84) Unregelmäßigkeiten ausgebildet sind, so dass Hohlräume verlässlich vorgesehen werden können.

9. Kochgeräte-Deckplatte (1, 21, 31, 41, 51, 61, 71, 81) nach einem der Ansprüche 1 bis 8, wobei die Helligkeitsverbesserungsschicht (3, 23, 33, 43, 53, 63, 73, 83) ein oder mehrere Elemente enthält, die ausgewählt werden aus der Gruppe, die besteht aus: Glimmer, Aluminiumflocken, Glaspartikeln, Glasflocken, Glasflocken mit einer aufgedampften Metallschicht und Glimmer mit einer Metalloxidschicht.

10. Kochgeräte-Deckplatte (1, 21, 31, 41, 51, 61, 71, 81) gemäß einem der Ansprüche 1 bis 9, wobei eine untere Oberfläche des kristallisierten Glassubstrats (2, 22, 32, 42, 52, 62, 72, 82) eine Oberflächenrauheit Ra von 0,1 um oder mehr und 10 $\mu$m oder weniger aufweist.

11. Kochgeräte-Deckplatte (1, 21, 31, 41, 51, 61, 71, 81) nach einem der Ansprüche 1 bis 10, wobei die Helligkeitsverbesserungsschicht (3, 23, 33, 43, 53, 63, 73, 83) eine Dicke von 800 nm oder mehr aufweist.

12. Kochgeräte-Deckplatte (1, 21, 31, 41, 51, 61, 71, 81) nach einem der Ansprüche 1 bis 11, wobei die Helligkeitsverbesserungsschicht (3, 23, 33, 43, 53, 63, 73, 83) $Li_2O$-$Al_2O_3$-$SiO_2$ als Hauptbestandteil enthält und transparent oder durchscheinend ist.

13. Kochgerät-Deckplatte (1, 21, 31, 41, 51, 61, 71, 81) nach einem der Ansprüche 1 bis 12, die ferner eine lichtabschirmende Schicht umfasst, die auf einer unteren Oberfläche der Substratfarbverbesserungsschicht vorgesehen ist.

14. Kochgeräte-Deckplatte (1, 21, 31, 41, 51, 61, 71, 81) nach einem der Ansprüche 1 bis 13, wobei die Helligkeitsverbesserungsschicht (3, 23, 33, 43, 53, 63, 73, 83) eine hohlraumhaltige Schicht ist, als Hauptbestandteil $Li_2O$-$Al_2O_3$-$SiO_2$ enthält und transparent oder durchscheinend ist.

**Revendications**

1. Plaque supérieure de dispositif de cuisson (1, 21, 31, 41, 51, 61, 71, 81) blanche comprenant :

un substrat de verre cristallisé (2, 22, 32, 42, 52, 62, 72, 82) contenant $Li_2O$-$Al_2O_3$-$SiO_2$ comme composant principal et un élément de transition ; et

une couche d'amélioration de couleur de substrat prévue sur une surface inférieure du substrat de verre cristallisé (2, 22, 32, 42, 52, 62, 72, 82), la couche d'amélioration de couleur de substrat contenant un pigment bleu et incluant une couche de renforcement de luminosité (3, 23, 33, 43, 53, 63, 73, 83) ayant un indice de réfraction plus petit que celui du substrat de verre cristallisé (2, 22, 32, 42, 52, 62, 72, 82) ou non inférieur à un indice de réfraction du substrat de verre cristallisé (2, 22, 32, 42, 52, 62, 72, 82) + 0,1.

2. Plaque supérieure de dispositif de cuisson (1, 21, 31, 41, 51, 61, 71, 81) selon la revendication 1, dans laquelle la couche de renforcement de luminosité (3, 23, 33, 43, 53, 63, 73, 83) contient le pigment bleu.

3. Plaque supérieure de dispositif de cuisson (1, 21, 31, 41, 51, 61, 71, 81) selon la revendication 1, dans laquelle la couche d'amélioration de couleur de substrat inclut une couche d'ajustement de ton de couleur (4, 24, 34, 44, 54, 64, 74, 84) prévue sur une surface inférieure de la couche de renforcement de luminosité (3, 23, 33, 43, 53, 63, 73, 83), la couche d'ajustement de ton de couleur (4, 24, 34, 44, 54, 64, 74, 84) contenant un pigment blanc et le pigment bleu.

4. Plaque supérieure de dispositif de cuisson (1, 21, 31, 41, 51, 61, 71, 81) selon la revendication 3, dans laquelle la couche de renforcement de luminosité (3, 23, 33, 43, 53, 63, 73, 83) contient le pigment bleu.

5. Plaque supérieure de dispositif de cuisson (1, 21, 31, 41, 51, 61, 71, 81) selon la revendication 1, dans laquelle :

la couche d'amélioration de couleur de substrat inclut la couche de renforcement de luminosité (3, 23, 33, 43, 53, 63, 73, 83) contenant le pigment bleu ; et

la couche d'amélioration de couleur de substrat inclut une couche d'ajustement de ton de couleur (4, 24, 34, 44, 54, 64, 74, 84) prévue sur une surface inférieure de la couche de renforcement de luminosité (3, 23, 33, 43, 53, 63, 73, 83), la couche d'ajustement de ton de couleur (4, 24, 34, 44, 54, 64, 74, 84) contenant un pigment blanc.

6. Plaque supérieure de dispositif de cuisson (1, 21, 31, 41, 51, 61, 71, 81) selon la revendication 1, dans laquelle la couche d'amélioration de couleur de substrat est formée de la couche de renforcement de luminosité (3, 23, 33, 43, 53, 63, 73, 83) contenant le pigment bleu.

7. Plaque supérieure de dispositif de cuisson (1, 21, 31, 41, 51, 61, 71, 81) selon l'une quelconque des revendications 1 à 6, dans laquelle la couche de renforcement de luminosité (3, 23, 33, 43, 53, 63, 73, 83) est une couche contenant des vides contenant une ou plusieurs particules creuses et un matériau poreux, ou une couche contenant des vides dans laquelle des irrégularités sont formées sur une surface inférieure du substrat de verre cristallisé (2, 22, 32, 42, 52, 62, 72, 82) de manière que les vides puissent être fixés.

8. Plaque supérieure de dispositif de cuisson (1, 21, 31, 41, 51, 61, 71, 81) selon l'une quelconque des revendications 3 à 5,

dans laquelle la couche de renforcement de luminosité (3, 23, 33, 43, 53, 63, 73, 83) est
une couche contenant des vides dans laquelle un espaceur est prévu entre le substrat de verre cristallisé (2, 22, 32, 42, 52, 62, 72, 82) et la couche d'ajustement de ton de couleur (4, 24, 34, 44, 54, 64, 74, 84) de manière que les vides puissent être fixés, ou
une couche contenant des vides dans laquelle des irrégularités sont formées sur une surface supérieure de la couche d'ajustement de ton de couleur (4, 24, 34, 44, 54, 64, 74, 84) de manière que les vides puissent être fixés.

9. Plaque supérieure de dispositif de cuisson (1, 21, 31, 41, 51, 61, 71, 81) selon l'une quelconque des revendications 1 à 8, dans laquelle la couche de renforcement de luminosité (3, 23, 33, 43, 53, 63, 73, 83) contient un ou plusieurs éléments sélectionnés dans le groupe constitué par le mica, des paillettes d'aluminium, des particules de verre, des paillettes de verre, des paillettes de verre incluant une couche de métal déposée en phase vapeur, et du mica incluant une couche d'oxyde de métal.

10. Plaque supérieure de dispositif de cuisson (1, 21, 31, 41, 51, 61, 71, 81) selon l'une quelconque des revendications 1 à 9, dans laquelle une surface inférieure du substrat de verre cristallisé (2, 22, 32, 42, 52, 62, 72, 82) présente une rugosité de surface Ra supérieure ou égale à 0,1 $\mu$m et inférieure ou égale à 10 $\mu$m.

11. Plaque supérieure de dispositif de cuisson (1, 21, 31, 41, 51, 61, 71, 81 )selon l'une quelconque des revendications 1 à 10, dans laquelle la couche de renforcement de luminosité (3, 23, 33, 43, 53, 63, 73, 83) a une épaisseur supérieure ou égale à 800 nm.

12. Plaque supérieure de dispositif de cuisson (1, 21, 31, 41, 51, 61, 71, 81) selon l'une quelconque des revendications 1 à 11, dans laquelle la couche de renforcement de luminosité (3, 23, 33, 43, 53, 63, 73, 83) contient $Li_2O$-$Al_2O_3$-$SiO_2$ comme composant principal, et est transparente ou translucide.

13. Plaque supérieure de dispositif de cuisson (1, 21, 31, 41, 51, 61, 71, 81) selon l'une quelconque des revendications 1 à 12, comprenant en outre une couche de protection contre la lumière prévue sur une surface inférieure de la couche d'amélioration de couleur de substrat.

14. Plaque supérieure de dispositif de cuisson (1, 21, 31, 41, 51, 61, 71, 81) selon l'une quelconque des revendications 1 à 13, dans laquelle la couche de renforcement de luminosité (3, 23, 33, 43, 53, 63, 73, 83) est une couche contenant des vides, contient $Li_2O$-$Al_2O_3$-$SiO_2$ comme composant principal, et est transparente ou translucide.

[FIG.1]

[FIG.2]

[FIG. 3]

EP 4 112 576 B1

[FIG.4A]

[FIG.4B]

[FIG.5]

[FIG.6]

31

32

35 33

34

36

[FIG.7]

41

42

43

44

[FIG.8]

51

52

53

54

[FIG.9]

1

2

5

3

4

[FIG.10]

[FIG.11]

[FIG.12]

[FIG.13]

[FIG.14]

[FIG.15]

**EP 4 112 576 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008016318 A
- JP 2008215651 A
- JP 2008267633 A
- JP 2011208820 A
- JP 2003168548 A
- JP 10273342 A
- JP 2008536791 A
- JP 2007530405 A
- JP 2020033278 A
- JP 2020217694 A